# EUROPÄISCHE PATENTSCHRIFT

(11) **EP 1 196 916 B1**
(45) Veröffentlichungstag und Bekanntmachung des Hinweises auf die Patenterteilung: **07.09.2005**
(21) Anmeldenummer: 00938674.9
(22) Anmeldetag: 23.05.2000
(51) Int. Cl.: G11B 7/24

(54) **DATENSPEICHER**
DATA MEMORY
MEMOIRE DE DONNEES

(30) Priorität: 12.07.1999 DE 19932902
(43) Veröffentlichungstag der Anmeldung: 17.04.2002
(73) Patentinhaber: tesa AG, 20253 Hamburg (DE)
(72) Erfinder: LEIBER, Jörn, 22529 Hamburg (DE); MÜSSIG, Bernhard, D-21218 Seevetal (DE); STADLER, Stefan, 22359 Hamburg (DE)
(74) Vertreter: UEXKÜLL & STOLBERG
(86) Internationale Anmeldenummer: PCT/EP2000/004676
(87) Internationale Veröffentlichungsnummer: WO 2001/004886

(56) Entgegenhaltungen:
- EP-A- 0 421 761
- EP-A- 0 475 336
- US-A- 4 860 273
- DATABASE WPI Section Ch, Week 199134 Derwent Publications Ltd., London, GB; Class A89, AN 1991-250057 XP002148374 & JP 03 164293 A (TOYO INK MFG CO), 16. Juli 1991 (1991-07-16)
- DATABASE WPI Section Ch, Week 198813 Derwent Publications Ltd., London, GB; Class A89, AN 1988-088187 XP002148877 & JP 63 039381 A (FUJI PHOTO FILM CO LTD), 19. Februar 1988 (1988-02-19)

## Beschreibung

Die Erfindung betrifft einen Datenspeicher mit einem optischen Informationsträger, der einen zum Speichern von Information eingerichteten Polymerträger aufweist.

In der DE 298 16 802 ist ein Datenspeicher mit einem optischen Informationsträger beschrieben, der eine Polymerfolie enthält. Als Material für die Polymerfolie werden Polymethylmethacrylat sowie ein von der Beiersdorf AG unter der Bezeichnung "Tesafilm kristallklar" vertriebener Polymerfilm genannt, der biaxial orientiertes Polypropylen aufweist. Bei diesem Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines Schreibstrahls eines Datenlaufwerks lokal erwärmt wird, wodurch sich die Brechzahl und damit das Reflexionsvermögen (Reflektivität) an der Grenzfläche der Polymerfolie lokal ändern. Dies kann mit Hilfe eines Lesestrahls in dem Datenlaufwerk erfaßt werden. Durch Fokussieren des Schreibstrahls oder Lesestrahls läßt sich die Information gezielt in eine vorgewählte Lage des Informationsträgers einschreiben bzw. daraus auslesen. Der Wickelkern kann optisch transparent sein und in seinem Zentrum eine Aussparung aufweisen, die zum Aufnehmen der Schreib- und Leseeinrichtung eines Datenlaufwerks dient. Dabei wird die Schreib- und Leseeinrichtung relativ zu dem Datenspeicher bewegt, während der Datenspeicher ruht, so daß der Datenspeicher nicht im Hinblick auf eine schnelle Rotationsbewegung ausgewuchtet zu sein braucht.

Mit dem vorbekannten Datenspeicher lassen sich bereits sehr hohe Speicherdichten erzielen. Wünschenswert ist jedoch eine weitere Steigerung der Speicherdichte.

Es ist Aufgabe der Erfindung, einen Datenspeicher mit einem optischen Informationsträger, der einen zum Speichern von Information eingerichteten Polymerträger aufweist, zu schaffen, bei welchem die grundsätzliche Möglichkeit zu einer Steigerung der Speicherdichte besteht.

Diese Aufgabe wird gelöst durch einen Datenspeicher mit den Merkmalen des Anspruchs 1. Vorteilhafte Ausgestaltungen der Erfindung ergeben sich aus den abhängigen Ansprüchen. Die Ansprüche 14 bis 16 betreffen Verwendungen derartiger Datenspeicher.

Der erfindungsgemäße Datenspeicher hat einen optischen Informationsträger, der einen zum Speichern von Information eingerichteten Polymerträger aufweist. Zusätzlich weist der optische Informationsträger eine einen Farbstoff enthaltende Schicht auf, die zum Speichern von Information lokal optisch veränderbar ist. Grundsätzlich kann der Datenspeicher bereits vom Hersteller mit Information beschrieben sein, was sowohl für den Polymerträger als auch für die einen Farbstoff enthaltende Schicht gilt. Es ist aber auch denkbar, den optischen Informationsträger so auszugestalten, daß ein Anwender Information in den Datenspeicher eingeben kann, wobei der Polymerträger und/oder die den Farbstoff enthaltende Schicht benutzt werden.

Dadurch, daß der Datenspeicher neben dem zum Speichern von Information eingerichteten Polymerträger eine zusätzliche Schicht aufweist, die zum Speichern von Information genutzt werden kann, läßt sich prinzipiell eine sehr hohe Speicherdichte erzielen. Für diesen Zweck besonders günstige Ausführungsformen werden weiter unten erläutert.

Vorzugsweise ist der Farbstoff mittels eines Schreibstrahls zumindest teilweise ausbleichbar. In diesem Fall lassen sich Daten (Informationseinheiten) in die einen Farbstoff enthaltende Schicht einschreiben, indem der Farbstoff zum Beispiel mit Hilfe intensiver Laserpulse entsprechend der einzugebenden Information lokal ausgebleicht wird. Die Fläche für eine gespeicherte Informationseinheit hat dabei typischerweise einen Durchmesser oder eine Seitenlänge von etwa 1 µm. Durch das teilweise oder vollständige Ausbleichen des Farbstoffs ändern sich die optischen Eigenschaften an der betroffenen Stelle deutlich, was von einem geeigneten Lesestrahl erfaßt werden kann. Wenn zum Beispiel der Frequenzbereich des Lesestrahls auf den Absorptionsbereich des Farbstoffs abgestimmt ist, ist die Absorption des Lesestrahls an einer ausgebleichten Stelle geringer als in deren Umgebung, die Farbstoff aufweist. Wenn der Lesestrahl nach Durchdringen der den Farbstoff enthaltenden Schicht an einer Grenzfläche des Informationsträgers reflektiert wird, wird also von den ausgebleichten Stellen ein deutliches Lesesignal erzeugt. Ferner haben Änderungen in der Absorptionswirkung aufgrund der Wellenlängenabhängigkeit der Brechzahl, die im Bereich einer Absorptionsbande besonders stark ist, Änderungen der Brechzahl zur Folge. Dadurch ergeben sich lokal Änderungen der Reflektivität, und auch die Phasenlage eines Lesestrahls wird beeinflußt. All dies kann ausgenutzt werden, um ein Lesesignal zu erhalten.

Der Farbstoff kann zum Beispiel ein Cyanin, ein Phthalocyanin oder eine Mischung derartiger Substanzen sein. Cyanine und Phthalocyanine finden derzeit bei beschreibbaren CDs Anwendung. Weitere Beispiele für den Farbstoff sind Eosin und Eosinscharlach. Neben dem Farbstoff kann die den Farbstoff enthaltende Schicht auch andere Substanzen aufweisen, zum Beispiel ein Bindemittel; in diesem Zusammenhang wird weiter unten eine vorteilhafte Ausgestaltung erläutert.

Bei einer bevorzugten Ausführungsform der Erfindung ist die Brechzahl des Polymerträgers lokal durch Erwärmung veränderbar. Ein Polymerträger mit dieser Eigenschaft läßt sich zum Beispiel in Form einer verstreckten Polymerfolie ausbilden, die beispielsweise bei der Herstellung innerhalb ihrer Ebene in zwei senkrecht aufeinanderstehenden Richtungen vorgespannt wird. Als Material für die Polymerfolie kommen zum Beispiel Polymethylmethacrylat (PMMA) oder insbesondere biaxial orientiertes Polypropylen (BOPP) in Betracht, aber auch andere Materialien sind möglich. In einen Informationsträger, der einen derartigen Polymerträger aufweist, lassen sich mit Hilfe eines Schreibstrahls Informationseinheiten einschreiben. Bei einer verstreckten Polymerfolie ist im Folienmaterial eine hohe Energiedichte gespeichert. Durch Deposition einer verhältnismäßig geringen Energiemenge pro Flächeneinheit mit Hilfe eines Schreibstrahls kann dann eine starke Materialänderung (zum Beispiel eine Materialverdichtung) durch Rückverformung erhalten werden, die in einer lokalen Änderung der Brechzahl und einer Änderung der optischen Weglänge im Material resultiert. Auf diese Weise läßt sich zum Beispiel eine Änderung der Brechzahl in dem Bereich, der durch den Schreibstrahl lokal erwärmt wird, in der Größenordnung von 0,2 erreichen, und zwar über eine Fläche für eine gespeicherte Informationseinheit mit einem Durchmesser oder einer Seitenlänge von etwa 1 µm. Dies führt zu einer Änderung der lokalen Reflektivität, die sich mit Hilfe eines Lesestrahls gut erfassen läßt. Die Details der lokalen optischen Veränderung des Polymerträgers beim Speichern von Information unterscheiden sich also von denen beim Speichern von Information in der einen Farbstoff enthaltenden Schicht.

Dem Polymerträger kann ein Absorber zugeordnet sein, der dazu eingerichtet ist, einen Schreibstrahl zumindest teilweise zu absorbieren und die dabei erzeugte Wärme zumindest teilweise lokal an den Polymerträger abzugeben. Der Absorber enthält zum Beispiel Farbstoffmoleküle, die in dem Polymerträger oder in einer zu dem Polymerträger benachbarten Schicht, zum Beispiel einer Adhäsionsschicht (siehe unten) oder auch der oben erläuterten Schicht mit dem Farbstoff, enthalten sind, und ermöglicht eine zur Veränderung der Brechzahl ausreichende lokale Erwärmung des Polymerträgers bei relativ geringer Intensität des Schreibstrahls.

Ein weiterer Vorteil der Erfindung kommt zum Tragen, wenn der Informationsträger dazu eingerichtet ist, daß der Frequenzbereich eines Lesestrahls zum Auslesen von Information aus dem Polymerträger von dem Frequenzbereich eines Lesestrahls zum Auslesen von Information aus der einen Farbstoff enthaltenden Schicht verschieden ist. Bei dieser Ausführungsform können nämlich in der einen Farbstoff enthaltenden Schicht Daten gespeichert werden oder gespeichert sein, die sich nur mit Hilfe eines Lesestrahls erfassen lassen, dessen Frequenzbereich zum Beispiel auf die Absorption in dem Farbstoff abgestimmt ist, wobei der Farbstoff für andere Frequenzbereiche praktisch durchlässig ist. So ist es möglich, einen derartigen Datenspeicher in einem darauf abgestimmten Laufwerk zu verwenden, das eine Leseeinrichtung und optional eine Schreibeinrichtung aufweist, wobei die Leseeinrichtung mit einem Lesestrahl arbeitet, dessen Frequenzbereich nur zum Auslesen von Information aus dem Polymerträger, aber nicht zum Auslesen von Information aus der einen Farbstoff enthaltenden Schicht eingerichtet ist. In der Schicht mit dem Farbstoff können also versteckte Daten untergebracht werden, die sich mit dem erläuterten Laufwerk nicht auslesen lassen, was in manchen Anwendungsumgebungen Vorteile bietet. Wenn dagegen der Datenspeicher in einem Laufwerk verwendet wird, das eine Leseeinrichtung und optional eine Schreibeinrichtung aufweist, wobei die Leseeinrichtung mit Lesestrahlen arbeitet, deren Frequenzbereiche zum Auslesen von Information aus dem Polymerträger und zum Auslesen von Information aus der einen Farbstoff enthaltenden Schicht eingerichtet sind, lassen sich mit diesem Laufwerk alle abgespeicherten Daten erkennen, und der Vorteil, daß der erfindungsgemäße Datenspeicher eine besonders hohe Speicherdichte bietet, kann genutzt werden.

Bei einer bevorzugten Ausführungsform der Erfindung weist der Informationsträger mehrere Polymerträgerlagen (vorzugsweise Polymerfolienlagen) auf, durch die hindurch Daten oder Informationseinheiten aus einer vorgewählten Polymerträgerlage auslesbar und optional in eine vorgewählte Polymerträgerlage schreibbar sind. Vorzugsweise ist zwischen benachbarten Polymerträgerlagen jeweils eine Adhäsionsschicht angeordnet, um die Polymerträgerlagen untereinander zu fixieren. Als Adhäsionsmittel eignet sich zum Beispiel ein gasblasenfreier Acrylatkleber, der z.B. chemisch oder durch UV- bzw. Elektronenbestrahlung vernetzt wird. Wenn die Brechzahl der Adhäsionsschicht nur geringfügig von der Brechzahl des Polymerträgers abweicht, werden störende Reflexionen eines Lesestrahls oder Schreibstrahls an einer Grenzschicht zwischen einer Polymerträgerlage und einer benachbarten Adhäsionsschicht minimiert. Besonders vorteilhaft ist es, wenn der Unterschied der Brechzahlen kleiner als 0,005 ist. Ein bestehender Unterschied der Brechzahlen kann jedoch zum Formatieren des Datenspeichers genutzt werden. Bei einer bevorzugten Ausführungsform ist mindestens eine Adhäsionsschicht als Farbstoff enthaltende Schicht eingerichtet, die zum Speichern von Information lokal optisch veränderbar ist. Es können auch mehrere oder alle Adhäsionsschichten zwischen Polymerträgerlagen als derartige Schichten zum Speichern von Information vorgesehen sein. Dieser Aufbau des Datenspeichers ist besonders kompakt, da die Adhäsionsschichten nicht nur zum Verkleben der Polymerträgerlagen, sondern gleichzeitig zur Informationsspeicherung genutzt werden.

Zusätzlich können die Adhäsionsschichten den oben erwähnten Absorber enthalten, der dazu eingerichtet ist, Wärme aus einem Schreibstrahl zu absorbieren und an den Polymerträger abzugeben.

Als Polymerträger kann Plattenmaterial verwendet werden. Wie bereits erwähnt, kann der Polymerträger aber auch eine Polymerfolie aufweisen, zum Beispiel aus biaxial orientiertem Polypropylen (BOPP). In diesem Fall ist bei einer bevorzugten Ausführungsform der Informationsträger spiralartig gewickelt, zum Beispiel auf einen optisch transparenten Wickelkern, der in seinem Zentralbereich eine Aussparung aufweist. Vorzugsweise ist dabei zwischen benachbarten Polymerfolienlagen oder -windungen jeweils eine Adhäsionsschicht vorgesehen, die Farbstoff zum Speichern von Information enthält. Mit anderen Worten ausgedrückt, hat der Informationsträger also eine zusammenhängende Adhäsionsschicht, die genauso wie die Polymerfolie spiralartig gewunden ist. So können zum Beispiel 10 bis 30 Polymerfolienlagen aufgewickelt sein, aber auch mehr oder weniger. Bei einer Dicke der Polymerfolie zwischen 10 µm und 100 µm, vorzugsweise unter 50 µm oder um 35 µm, läßt sich die Information auf unterschiedlichen Polymerfolienlagen bzw. auf unterschiedlichen Farbstoff enthaltenden Lagen der Adhäsionsschicht mit Hilfe von zum Beispiel aus der DVD-Technologie bekannten Lese- und Schreibeinrichtungen gut auflösbar voneinander trennen. Die Adhäsionsschicht kann zum Beispiel eine Dicke im Bereich zwischen 1 µm und 40 µm haben, vorzugsweise unter 25 µm.

Wenn der Datenspeicher mit spiralartig aufgewickeltem Informationsträger einen optisch transparenten Wickelkern hat, der in seinem Zentralbereich eine Aussparung aufweist, ist es möglich, in dieser Aussparung eine Leseeinrichtung und optional eine Schreibeinrichtung eines auf den Datenspeicher abgestimmten Laufwerks anzuordnen und zum Lesen bzw. zum Schreiben von Information relativ zu dem Datenspeicher zu bewegen, während der Datenspeicher ruht. Ein ruhender Datenspeicher hat den Vorteil, daß er nicht ausgewuchtet werden muß, um hohe Rotationsgeschwindigkeiten zu ermöglichen, was sich günstig auf die Herstellungskosten auswirkt.

Im folgenden wird die Erfindung anhand von Ausführungsbeispielen näher beschrieben. Die Zeichnungen zeigen in
- Figur 1: in den Teilen (a) und (b) schematische Darstellungen zweier Schritte beim Einschreiben von Information in einen erfindungsgemäßen Datenspeicher und
- Figur 2: einen erfindungsgemäßen Datenspeicher, der einen spiralartig gewickelten optischen Informationsträger aufweist, in schematischer perspektivischer Darstellung, wobei in einer Aussparung im Zentralbereich des Datenspeichers Teile eines auf den Datenspeicher abgestimmten Laufwerks angeordnet sind.

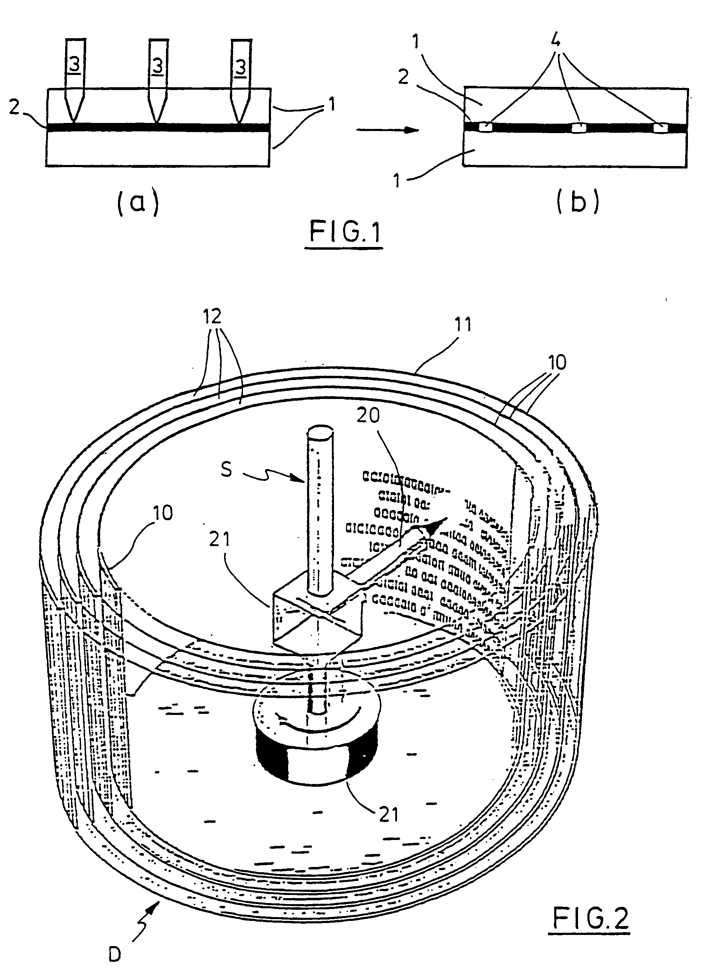

Figur 1 veranschaulicht den Grundaufbau des erfindungsgemäßen Datenspeichers in schematischer Weise. Eingezeichnet sind zwei Lagen eines Polymerträgers 1, zwischen denen sich eine Schicht 2 befindet.

Der Polymerträger 1 ist zum Speichern von Information eingerichtet. Er kann zum Beispiel als Polymerfolie aus biaxial orientiertem Polypropylen ausgestaltet sein, das sich bei lokaler Erwärmung in dem der erhöhten Temperatur ausgesetzten Bereich zusammenzieht und dort seine Brechzahl ändert. Dies führt zu einer lokalen Änderung der Reflektivität und kann über einen Lesestrahl erfaßt werden, wie weiter oben bereits erläutert.

Die Schicht 2 enthält einen Farbstoff, der zum Speichern von Information lokal optisch veränderbar ist. Geeignete Farbstoffe sind zum Beispiel Cyanine und Phthalocyanine, die bei intensiver Bestrahlung mit Licht ausbleichen. Besonders effektiv ist Licht in einem Frequenzbereich, der in das Maximum der Absorption des verwendeten Farbstoffs fällt. Denn in diesem Frequenzbereich wird das Licht je nach Konzentration des verwendeten Farbstoffs zu einem großen Teil oder sogar vollständig absorbiert, was zu einer Zerstörung des Farbstoffs und damit zu einer Änderung der optischen Eigenschaften der Schicht 2 an der betrachteten Stelle führt, wie bereits weiter oben erläutert.

Die Figur 1(a) zeigt, wie drei Schreibstrahlen 3 in Form intensiver Laserpulse auf drei Stellen der Schicht 2 fokussiert werden, um dort den Farbstoff auszubleichen und auf diese Weise Information in die Schicht 2 einzuschreiben. Das Ergebnis ist in Figur 1(b) dargestellt. An den drei Stellen 4 ist der Farbstoff ausgebleicht, was zum Auslesen der Information von einem Lesestrahl erfaßt werden kann.

Je nach Art der Änderung der lokalen optischen Eigenschaften in dem Polymerträger 1 und der Schicht 2 sind zum Einschreiben bzw. Auslesen von Information für den Polymerträger 1 und die Schicht 2 Schreib- bzw. Lesestrahlen unterschiedlicher Art, insbesondere unterschiedlicher Leistung oder unterschiedlicher Wellenlänge erforderlich.

In Figur 1(a) sind drei Schreibstrahlen 3 eingezeichnet. Sie können gleichzeitig eingesetzt werden. Denkbar ist auch die Verwendung einer Maske, die das Schreibstrahllicht nur an vorgegebenen Stellen durchläßt, oder eine optische Abbildung einer intensiven Lichtquelle auf die Schicht 2, so daß dort an vorgegebenen Stellen eine Belichtung stattfindet; derartige Schreibverfahren eignen sich besonders für teilweise oder vollständig von einem Hersteller vorbeschriebene Datenspeicher, insbesondere bei einem nicht gewickelten Informationsträger oder bei einem gewickelten Informationsträger vor dem Wickeln. Eine andere Möglichkeit besteht darin, mit einem einzigen Schreibstrahl zu arbeiten, der sequentiell auf die gewünschten Stellen in der Schicht 2 gerichtet wird, wozu weiter unten ein Beispiel erläutert ist.

Figur 2 zeigt in schematischer Darstellung einen Datenspeicher D und eine Schreib- und Leseeinrichtung S eines auf den Datenspeicher D abgestimmten Laufwerks. Der Datenspeicher D weist eine Anzahl von Lagen 10 einer Polymerfolie 11 auf, die spiralartig auf einen optisch transparenten, hülsenförmigen Wickelkern aufgewickelt ist. Der Wickelkern ist in Figur 2 der Übersichtlichkeit halber nicht dargestellt; er befindet sich innerhalb der innersten Lage 10. Zur besseren Veranschaulichung sind die einzelnen Lagen 10 der Polymerfolie 11 in Figur 2 als konzentrische Kreisringe gezeigt, obwohl die Lagen 10 durch spiralartiges Wickeln der Polymerfolie 11 ausgebildet sind. Zwischen benachbarten Lagen 10 der Polymerfolie 11 ist jeweils eine Adhäsionsschicht 12 angeordnet, wobei die Adhäsionsschichten 12 ebenso wie die Polymerfolie 11 spiralartig verlaufen und daher untereinander zusammenhängen. Aus Gründen der Übersichtlichkeit sind die Adhäsionsschichten 12 in Figur 2 in nicht maßstäblich vergrößerter Dicke eingezeichnet.

Die Polymerfolie 11 entspricht dem Polymerträger 1 in Figur 1 und dient als Informationsträger. Eine weitere Komponente des Informationsträgers wird durch die zusammenhängenden Adhäsionsschichten 12 gebildet, die einen Farbstoff enthalten, zum Speichern von Information lokal optisch veränderbar sind und der Schicht 2 in Figur 1 entsprechen.

Im Ausführungsbeispiel besteht die Polymerfolie 11 aus biaxial orientiertem Polypropylen und wurde vor dem Wickeln in beiden Flächenrichtungen vorgespannt (verstreckt). Die Polymerfolie 11 hat im Ausführungsbeispiel eine Dicke von 35 µm; andere Dicken im Bereich von 10 µm bis 100 µm oder auch außerhalb dieses Bereichs liegende Dicken sind ebenfalls denkbar. Im Ausführungsbeispiel enthält der Datenspeicher D zwanzig Lagen 10 der Polymerfolie 11 und hat einen Außendurchmesser von etwa 30 mm. Die Höhe des Wickelzylinders beträgt 19 mm. Eine andere Anzahl von Lagen 10 oder andere Abmessungen sind ebenfalls möglich. Die Anzahl der Wicklungen oder Lagen 10 kann zum Beispiel zwischen zehn und dreißig liegen, aber auch größer als dreißig sein.

Die Adhäsionsschichten 12 sind gasblasenfrei und haben im Ausführungsbeispiel als Grundsubstanz Acrylatkleber, dem ein Absorber-Farbstoff beigemischt ist, um bei einem Schreibvorgang eine lokale Wärmeabgabe an eine benachbarte Lage 10 der Polymerfolie 11 zu erleichtern. Zusätzlich enthalten die Adhäsionsschichten 12 einen Farbstoff, der zum Speichern von Information durch lokale optische Änderung dient. Im Ausführungsbeispiel ist dies Kupferphtalocyanin, das dem Acrylatkleber in einer Konzentration von 0,5 bis 1,0 Gewichts-% beigemischt ist und ein bevorzugtes Absorptionsvermögen im Wellenlängenbereich um 658 nm hat. Die Adhäsionsschichten 12 haben im Ausführungsbeispiel eine Dicke von 23 µm, wobei bevorzugte Schichtdicken zwischen 1 µm und 40 µm liegen.

Es ist denkbar, z.B. Phtalocyanin in den Adhäsionsschichten 12 sowohl als Absorber-Farbstoff zum Erleichtern einer lokalen Wärmeabgabe an eine benachbarte Lage 10 der Polymerfolie 11 als auch als Farbstoff zum Speichern von Information durch lokale optische Änderung zu verwenden. Wenn die Adhäsionsschichten 12 ausreichend dick sind, zum Beispiel in der Größenordnung von 20 µm, kann in diesem Fall durch Fokussieren eines Schreibstrahls (siehe unten) festgelegt werden, ob Information in einer Adhäsionsschicht 12 oder einer benachbarten Lage 10 der Polymerfolie 11 abgelegt werden soll: Wird der Schreibstrahl in den Randbereich einer Adhäsionsschicht 12 fokussiert, also auf eine Stelle, die sich dicht an einer Lage 10 der Polymerfolie 11 befindet, führt dies zu einer lokalen Erwärmung in dieser Lage 10 und damit zur Speicherung der Information in der Polymerfolie 11. Wenn dagegen der Schreibstrahl in den mittleren Bereich einer Adhäsionsschicht 12 fokussiert wird, werden die nächstliegenden Stellen der Polymerfolie 11 nicht ausreichend beeinflußt, um dort Information abzuspeichern, aber die Stelle im mittleren Bereich der Adhäsionsschicht 12 wird optisch verändert, was von einem entsprechend fokussierten Lesestrahl erfaßt werden kann. Bei sehr dünnen Adhäsionsschichten 12 läßt sich durch Fokussieren keine ausreichende Auflösung längs des Schreib- bzw. Lesestrahls erreichen; dennoch ergibt sich eine nützliche Anwendung, weil in diesem Fall der Farbstoff beim Schreibvorgang einerseits für eine lokale Erwärmung der Polymerfolie 11 sorgt und andererseits selbst optisch verändert wird, so daß die kombinierte Veränderung der betreffenden Adhäsionsschicht 12 und der betreffenden Lage 10 der Polymerfolie 11 von einem Lesestrahl besonders leicht erfaßt werden kann.

Die im Innenraum des Wickelkerns angeordnete Schreib- und Leseeinrichtung S enthält einen Schreib- und Lesekopf 20, der mit Hilfe einer Mechanik 21 in den Richtungen der eingezeichneten Pfeile gedreht und axial hin- und herbewegt werden kann. Der Schreib- und Lesekopf 20 weist optische Elemente auf, mit deren Hilfe ein von einem in Figur 2 nicht dargestellten Laser erzeugter Lichtstrahl (zum Beispiel der Wellenlänge 630 nm oder 532 nm) auf die einzelnen Lagen 10 der Polymerfolie 11 fokussiert werden kann. Ferner kann der Schreib- und Lesekopf 20 einen von einem separaten Laser erzeugten Lichtstrahl, der von dem in den Adhäsionsschichten 12 enthaltenen Farbstoff bevorzugt absorbiert wird, auf die einzelnen Adhäsionsschichten 12 fokussieren. Da der Schreib- und Lesekopf 20 mit Hilfe der Mechanik 21 bewegt wird, kann er alle Lagen 10 und Adhäsionsschichten 12 des Datenspeichers D vollständig abtasten. Im Ausführungsbeispiel ruht dabei der Datenspeicher D. Er braucht also nicht im Hinblick auf eine hohe Rotationsgeschwindigkeit ausgewuchtet zu sein (und muß auch nicht abgewickelt bzw. umgespult werden), im Gegensatz zu dem Schreib- und Lesekopf 20. Der Übersichtlichkeit halber sind in Figur 1 die zum Auswuchten des Schreib- und Lesekopfs 20 vorgesehenen Elemente nicht gezeigt. Die erwähnten Laser befinden sich außerhalb des Schreib- und Lesekopfes 20 und sind stationär; die Laserstrahlen werden über optische Elemente in den Schreib- und Lesekopf 20 gelenkt.

Zum Speichern oder Einschreiben von Information in die Polymerfolie 11 des Datenspeichers D wird der erste der beiden im vorigen Absatz erwähnten Laser im Ausführungsbeispiel mit einer Strahlleistung von etwa 1 mW betrieben. Der Laserstrahl dient dabei als Schreibstrahl und wird auf eine vorgewählte Lage 10 der Polymerfolie 11 fokussiert, so daß der Strahlfleck kleiner als 1 µm ist, wobei die Lichtenergie in Form kurzer Pulse von etwa 10 µs Dauer eingebracht wird. Die Energie des Schreibstrahls wird in dem Strahlfleck absorbiert, begünstigt durch den Absorber in der benachbarten Adhäsionsschicht 12, was zu einer lokalen Erwärmung der Polymerfolie 11 und damit zu einer lokalen Änderung der Brechzahl und der Reflektivität führt. Beim Schreibvorgang ist der Schreibstrahl in den zu der betrachteten Lage 10 der Polymerfolie 11 benachbarten Lagen defokussiert, so daß die benachbarten Lagen der Polymerfolie 11 lokal nur geringfügig erwärmt werden und dort die gespeicherte Information nicht verändert wird.

In analoger Weise wird zum Speichern von Information in eine Adhäsionsschicht 12 des Datenspeichers D der zweite der beiden oben erwähnten Laser benutzt. Sein Schreibstrahl wird auf eine vorgewählte Adhäsionsschicht 12 fokussiert und kann ebenfalls gepulst betrieben werden, und zwar im Ausführungsbeispiel mit Pulsen einer Dauer von etwa 10 µs; die Ausgangsleistung des Lasers beträgt im Ausführungsbeispiel etwa 1 mW. Dabei bleicht der in der Adhäsionsschicht enthaltene Farbstoff im Strahlfleck aus. Es ist auch denkbar, diesen Laser im Continuous-Wave-Modus (CW-Modus) zu betreiben.

Um gespeicherte Information aus dem Datenspeicher D auszulesen, werden die Laser im Continuous-Wave-Modus (CW-Modus) betrieben. In Abhängigkeit von der gespeicherten Information wird der jeweilige, auf die gewünschte Stelle der Polymerfolie 11 bzw. einer Adhäsionsschicht 12 fokussierte Lesestrahl reflektiert, und die Intensität des reflektierten Strahls wird von einem Detektor in der Schreib- und Leseeinrichtung S erfaßt.

Der Datenspeicher kann auch von einer Ausführungsform sein, die vom Benutzer nicht beschreibbar ist. In diesem Fall enthält er vom Hersteller in den Polymerträger 1 bzw. die Schicht 2 eingeschriebene Informationseinheiten. Eine Schreibfunktion im Datenlaufwerk des Benutzers erübrigt sich dann.

Ferner kann das Laufwerk lediglich eine Leseeinrichtung und optional eine Schreibeinrichtung zum Lesen bzw. Schreiben von Information aus dem bzw. in den Polymerträger 1 aufweisen. Daten, die z.B. vom Hersteller des Datenspeichers oder von einem anderen Anwender mit Hilfe eines anderen Laufwerks in die Schicht 2 eingegeben wurden, sind dann nicht erkennbar, weil z.B. die Schicht 2 für den verwendeten Lesestrahl in dessen Frequenz- oder Wellenlängenbereich praktisch überall durchsichtig sind. Dies bietet für manche Anwendungsfälle Vorteile.

In dem Polymerträger 1 bzw. der Polymerfolie 11 sind die Informationseinheiten durch Änderung der optischen Eigenschaften in einem Bereich mit einer bevorzugten Größe von weniger als 1 µm ausgebildet. Dabei kann die Information binär gespeichert sein, d.h. die lokale Reflektivität nimmt an der Stelle einer Informationseinheit nur zwei Werte an. Das heißt, wenn die Reflektivität oberhalb eines festgelegten Schwellenwerts liegt, ist an der betrachteten Stelle des Informationsträgers z.B. eine "1" gespeichert, und wenn sie unterhalb dieses Schwellenwerts oder unterhalb eines anderen, niedrigeren Schwellenwerts liegt, entsprechend eine "0". Es ist aber auch denkbar, die Information in mehreren Graustufen abzuspeichern. Dies ist möglich, wenn sich die Reflektivität der Polymerfolie an der Stelle einer Informationseinheit durch definiertes Einstellen der Brechzahl auf gezielte Weise verändern läßt, ohne daß dabei eine Sättigung erreicht wird. In der Schicht 2 bzw. einer Adhäsionsschicht 12 lassen sich Daten grundsätzlich in zu diesen Möglichkeiten analogen Weisen abspeichern.

## Patentansprüche

1. Datenspeicher, mit einem optischen Informationsträger, der einen zum Speichern von Information eingerichteten Polymerträger (1) und als davon unabhängige Informationsspeicherschicht zusätzlich eine einen Farbstoff enthaltende Schicht (2) aufweist, die zum Speichern von Information lokal optisch veränderbar ist.

2. Datenspeicher nach Anspruch 1, **dadurch gekennzeichnet, daß** der Farbstoff mittels eines Schreibstrahls (3) zumindest teilweise ausbleichbar ist.

3. Datenspeicher nach Anspruch 1 oder 2, **dadurch gekennzeichnet, daß** der Farbstoff eine oder mehrere der aus der folgenden Gruppe ausgewählten Substanzen aufweist: Cyanine, Phthalocyanine.

4. Datenspeicher nach einem der Ansprüche 1 bis 3, **dadurch gekennzeichnet, daß** die Brechzahl des Polymerträgers (1; 11) lokal durch Erwärmung veränderbar ist.

5. Datenspeicher nach Anspruch 4, **dadurch gekennzeichnet, daß** dem Polymerträger (1; 11) ein Absorber zugeordnet ist, der dazu eingerichtet ist, einen Schreibstrahl zumindest teilweise zu absorbieren und die dabei erzeugte Wärme zumindest teilweise lokal an den Polymerträger (1; 11) abzugeben.

6. Datenspeicher nach einem der Ansprüche 1 bis 5, **dadurch gekennzeichnet, daß** der Informationsträger dazu eingerichtet ist, daß der Frequenzbereich eines Lesestrahls zum Auslesen von Information aus dem Polymerträger (1) von dem Frequenzbereich eines Lesestrahls zum Auslesen von Information aus der einen Farbstoff enthaltenden Schicht (2) verschieden ist.

7. Datenspeicher nach einem der Ansprüche 1 bis 6, **dadurch gekennzeichnet, daß** der Informationsträger mehrere Polymerträgerlagen (10) aufweist, durch die hindurch Informationseinheiten aus einer vorgewählten Polymerträgerlage (10) auslesbar und optional in eine vorgewählte Polymerträgerlage (10) schreibbar sind.

8. Datenspeicher nach Anspruch 7, **dadurch gekennzeichnet, daß** zwischen benachbarten Polymerträgerlagen (10) jeweils eine Adhäsionsschicht (12) angeordnet ist.

9. Datenspeicher nach Anspruch 8, **dadurch gekennzeichnet, daß** mindestens eine Adhäsionsschicht (12) als Farbstoff enthaltende Schicht eingerichtet ist, die zum Speichern von Information lokal optisch veränderbar ist.

10. Datenspeicher nach Anspruch 8 oder 9, **dadurch gekennzeichnet, daß** die Brechzahl der Adhäsionsschicht (12) nur geringfügig von der Brechzahl des Polymerträgers (11) abweicht.

11. Datenspeicher nach einem der Ansprüche 1 bis 10, **dadurch gekennzeichnet, daß** der Polymerträger eine Polymerfolie (11) aufweist.

12. Datenspeicher nach Anspruch 11, **dadurch gekennzeichnet, daß** der Informationsträger (11, 12) spiralartig gewickelt ist.

13. Datenspeicher nach Anspruch 12, **gekennzeichnet durch** einen optisch transparenten Wickelkern, der in seinem zentralbereich eine Aussparung aufweist.

14. Verwendung eines Datenspeichers nach Anspruch 6 in einem darauf abgestimmten Laufwerk, das eine Leseeinrichtung und optional eine Schreibeinrichtung aufweist, wobei die Leseeinrichtung mit einem Lesestrahl arbeitet, dessen Frequenzbereich nur zum Auslesen von Information aus dem Polymerträger (1), aber nicht zum Auslesen von Information aus der einen Farbstoff enthaltenden Schicht (2) eingerichtet ist.

15. Verwendung eines Datenspeichers nach Anspruch 6 in einem darauf abgestimmten Laufwerk, das eine Leseeinrichtung (S) und optional eine Schreibeinrichtung (S) aufweist, wobei die Leseeinrichtung (S) mit Lesestrahlen arbeitet, deren Frequenzbereiche zum Auslesen von Information aus dem Polymerträger (11) und zum Auslesen von Information aus der einen Farbstoff enthaltenden Schicht (12) eingerichtet sind.

16. Verwendung eines Datenspeichers nach Anspruch 13 in einem darauf abgestimmten Laufwerk, das eine Leseeinrichtung (S) und optional eine Schreibeinrichtung (S) aufweist, wobei die Leseeinrichtung (S) und die optionale Schreibeinrichtung (S) in der Aussparung im Zentralbereich des Wickelkerns angeordnet sind und zum Lesen bzw. Schreiben von Information relativ zu dem Datenspeicher (D) bewegt werden, während der Datenspeicher (D) ruht.

## Claims

1. Data storage medium, having an optical information carrier which comprises a polymer carrier (1), which is set up to store information, and, further, as an information storage layer independent of the polymer carrier (1), a layer (2) which comprises a dye and can be optically changed locally for the purpose of storing information.

2. Data storage medium according to Claim 1, **characterized in that** the dye can be at least partly bleached out by means of a write beam (3).

3. Data storage medium according to Claim 1 or 2, **characterized in that** the dye comprises one or more of the substances selected from the following group: cyanines, phthalocyanines.

4. Data storage medium according to any of Claims 1 to 3, **characterized in that** the refractive index of the polymer carrier (1; 11) can be changed locally by heating.

5. Data storage medium according to Claim 4, **characterized in that** the polymer carrier (1; 11) is assigned an absorber which is set up to absorb, at least partly, a write beam and to emit the generated heat, at least partly, locally to the polymer carrier (1; 11).

6. Data storage medium according to any of Claims 1 to 5, **characterized in that** the information carrier is set up so that the frequency range of a read beam for reading information from the polymer carrier (1) is different from the frequency range of a read beam for reading information from the dye layer (2).

7. Data storage medium according to any of Claims 1 to 6, **characterized in that** the information carrier comprises two or more polymer carrier plies (10) through which information units may be read from a preselected polymer carrier ply (10) and, optionally, written to a preselected polymer carrier ply (10).

8. Data storage medium according to Claim 7, **characterized in that** there is an adhesion layer (12) between each pair of adjacent polymer carrier plies (10).

9. Data storage medium according to Claim 8, **characterized in that** at least one adhesion layer (12) is set up as a dye layer which can be optically changed locally for the purpose of storing information.

10. Data storage medium according to Claim 8 or 9, **characterized in that** the refractive index of the adhesion layer (12) differs only slightly from the refractive index of the polymer carrier (11).

11. Data storage medium according to any of Claims 1 to 10, **characterized in that** the polymer carrier comprises a polymer film (11).

12. Data storage medium according to Claim 11, **characterized in that** the information carrier (11, 12) is wound in a spiral fashion.

13. Data storage medium according to Claim 12, **characterized by** an optically transparent winding core which has a recess in its central region.

14. The use of a data storage medium as claimed in Claim 6 in a drive which is attuned to it and comprises a read device and, optionally, a write device, the read device operating with a read beam whose frequency range is set up only for reading information from the polymer carrier (1) but not for reading information from the dye layer (2).

15. Use of a data storage medium according to Claim 6 in a drive which is attuned to it and comprises a read device (S) and, optionally, a write device (S), the read device (S) operating with read beams whose frequency ranges are set up for reading information from the polymer carrier (11) and for reading information from the dye layer (12).

16. Use of a data storage medium according to Claim 13 in a drive which is attuned to it and comprises a read device (S) and, optionally, a write device (S), the read device (S) and the optional write device (S) being arranged in the recess in the central region of the winding core and being moved relative to the data storage medium (D), while the data storage medium (D) is stationary, for the purpose of reading and/or writing information.

## Revendications

1. Mémoire de données, avec un support d'informations optique, qui présente un support polymère (1) conçu pour mémoriser des informations et en plus une couche (2) contenant une matière colorante, sous la forme d'une couche de mémoire d'informations indépendante de celui-ci, qui peut être localement modifiée optiquement pour la mémorisation d'informations.

2. Mémoire de données selon la revendication 1, **caractérisée en ce que** la matière colorante peut être décolorée au moins partiellement au moyen d'un faisceau d'écriture (3).

3. Mémoire de données selon la revendication 1 ou 2, **caractérisée en ce que** la matière colorante comprend une ou plusieurs des substances sélectionnées dans le groupe suivant: cyanines, phtalocyanines.

4. Mémoire de données selon l'une quelconque des revendications 1 à 3, **caractérisée en ce que** l'indice de réfraction du support polymère (1; 11) peut être modifié localement par chauffage.

5. Mémoire de données selon la revendication 4, **caractérisée en ce qu'**un absorbeur est associé au support polymère (1; 11), absorbeur qui est conçu pour absorber au moins partiellement un faisceau d'écriture et pour céder la chaleur ainsi produite au moins en partie localement au support polymère (1; 11).

6. Mémoire de données selon l'une quelconque des revendications 1 à 5, **caractérisée en ce que** le support d'informations est conçu pour que la plage de fréquence d'un faisceau de lecture pour lire l'information sur le support polymère (1) soit différente de la plage de fréquence d'un faisceau de lecture pour lire l'information dans la couche (2) contenant une matière colorante.

7. Mémoire de données selon l'une quelconque des revendications 1 à 6, **caractérisée en ce que** le support d'informations comprend plusieurs couches (10) de support polymère, à travers lesquelles les unités d'information peuvent être lues à partir d'une couche de support polymère (10) présélectionnée et peuvent en option être inscrites dans une couche de support polymère (10) présélectionnée.

8. Mémoire de données selon la revendication 7, **caractérisée en ce qu'**une couche adhésive (12) est chaque fois disposée entre deux couches de support polymère voisines (10).

9. Mémoire de données selon la revendication 8, **caractérisée en ce qu'**au moins une couche adhésive (12) est conçue comme une couche contenant une matière colorante, qui peut être localement modifiée optiquement pour mémoriser des informations.

10. Mémoire de données selon la revendication 8 ou 9, **caractérisée en ce que** l'indice de réfraction de la couche adhésive (12) ne diffère que légèrement de l'indice de réfraction du support polymère (11).

11. Mémoire de données selon l'une quelconque des revendications 1 à 10, **caractérisée en ce que** le support polymère comprend un film polymère (11).

12. Mémoire de données selon la revendication 11, **caractérisée en ce que** le support d'informations (11, 12) est enroulé en spirale.

13. Mémoire de données selon la revendication 12, **caractérisée par** un noyau de bobinage optiquement transparent, qui présente une découpe dans sa région centrale.

14. Utilisation d'une mémoire de données selon la revendication 6 dans un lecteur accordé à celle-ci, qui comprend un dispositif de lecture et en option un dispositif d'écriture, dans laquelle le dispositif de lecture opère avec un faisceau de lecture, dont la plage de fréquence est conçue uniquement pour lire des informations dans le support polymère (1), mais par pour lire des informations dans la couche (2) contenant une matière colorante.

15. Utilisation d'une mémoire de données selon la revendication 6 dans un lecteur accordé à celle-ci, qui comprend un dispositif de lecture (S) et en option un dispositif d'écriture (S), dans laquelle le dispositif de lecture (S) opère avec des faisceaux de lecture, dont les plages de fréquence sont conçues pour lire des informations dans le support polymère (11) et pour lire des informations dans la couche (12) contenant une matière colorante.

16. Utilisation d'une mémoire de données selon la revendication 13 dans un lecteur accordé à celle-ci, qui comprend un dispositif de lecture (S) et en option un dispositif d'écriture (S), dans laquelle le dispositif de lecture (S) et le dispositif d'écriture (S) en option sont disposés dans une découpe pratiquée dans la région centrale du noyau de bobinage et sont déplacés par rapport à la mémoire de données (D) pour lire respectivement pour inscrire dès informations, tandis que la mémoire de données (D) est au repos.
